(19) Europäisches Patentamt
European Patent Office
Office européen des brevets

(11) EP 4 636 189 A1

(12) EUROPEAN PATENT APPLICATION

(43) Date of publication:
**22.10.2025 Bulletin 2025/43**

(21) Application number: **24170701.7**

(22) Date of filing: **17.04.2024**

(51) International Patent Classification (IPC):
***E04C 5/16*** ***(2006.01)*** ***C04B 26/14*** ***(2006.01)***
***C08L 63/00*** ***(2006.01)*** ***C08L 63/04*** ***(2006.01)***

(52) Cooperative Patent Classification (CPC):
(C-Sets available)
**E04C 5/165; C04B 26/14; C08G 59/50;**
**C09J 163/00;** C04B 2111/00672 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hilti Aktiengesellschaft**
**9494 Schaan (LI)**

(72) Inventors:
- **Schönlein, Markus**
  **81249 München (DE)**
- **Eckstein, Andreas**
  **86899 Landsberg am Lech (DE)**
- **Winkler, Bernhard**
  **6800 Feldkirch (AT)**

(74) Representative: **Hilti Aktiengesellschaft**
**Corporate Intellectual Property**
**Feldkircherstrasse 100**
**Postfach 333**
**9494 Schaan (LI)**

# (54) COUPLING OF ELONGATED ELEMENTS USING A MULTI-COMPONENT RESIN MORTAR SYSTEM

(57) Kit of parts for coupling at least two elongated elements comprising two ends with a coupling device, the kit of parts comprising a coupling device, and a multi-component resin mortar system, wherein the coupling device comprises a coupling device body, wherein the coupling device body has an axis, a wall, a hollow body portion having an inner surface, and at least two receiving openings for receiving the at least two elongated elements, wherein the coupling device body comprises at least one support element on the inner surface of the hollow body portion, and wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin.

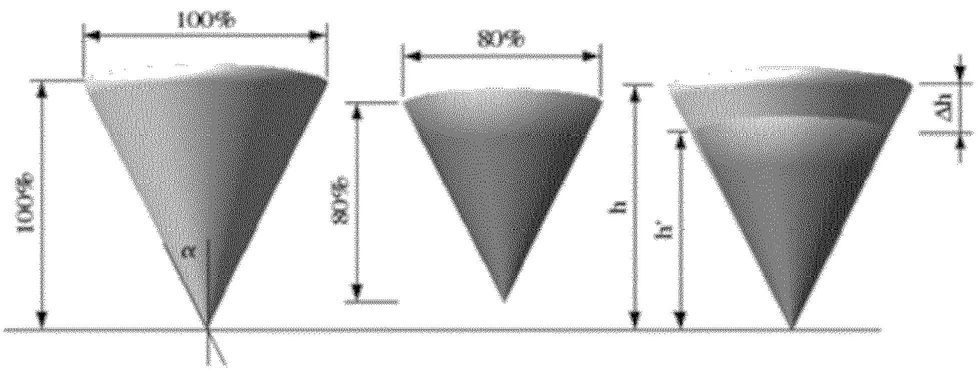


Figure 4

EP 4 636 189 A1

(52) Cooperative Patent Classification (CPC): (Cont.)

C-Sets
**C04B 26/14, C04B 40/065, C04B 24/14**

## Description

### Technical Field of the Invention

The present application is directed towards the technical field of coupling elongated elements in a sleeve using a multi-component resin mortar system and a sleeve. Preferably, the present invention is directed towards such coupling in the technical field of reinforced concrete. Hence, the present invention relates to a coupling device, a method for coupling, a kit of parts for coupling, and the use of a coupling device, a kit of parts, or a multi-component resin mortar system for coupling elongated elements in a coupling device using a multi-component resin mortar system.

### Background of the Invention

In many applications, there is the need to join to, or couple with, elongated elements. One such application is reinforced concrete where reinforcing bars, which are placed into the concrete, are typically supplied in discrete lengths. There are many locations where the reinforcing bar (rebar) must continue for a length longer than the discrete length supplied, and it becomes necessary to join multiple lengths together. One means of achieving this is to use a coupling device to join the bars together in an axial means.

Traditionally, in reinforced concrete, lap splicing is used to connect two rebars with each other (cf. Figure 1). Thereby, two rebars are placed in a partially overlapping manner and the overlapping part is fastened e.g. by using wire. However, this traditional technique has certain drawbacks. For instance, there are applications, in which such technique is simply not feasible, e.g. when the space for overlapping the rebars is limited, in areas where lab splicing would inflict a high congestion, which makes concrete pouring impossible, or in case rebars with a diameter of more than 32 mm are used. Furthermore, the method of lap slicing affords a high amount of work to be completed.

The prior art suggests mechanical coupling devices to remedy at least a few of these problems. One solution is directed towards threaded coupling devices. These coupling devices have the disadvantage that heavy equipment is needed to provide the correct torque to the coupling device or rebar, respectively. Furthermore, applying torque is not always possible. E.g. in the situation of a rebar having an angle, even a 90° angle, the solution of a threaded coupling device fails. This problem applies to both tapered and parallel threaded coupling devices. Moreover, the rebars need to be provided with a thread as well. This either creates more challenges in the production of the rebar or affords the application of a thread onto the rebar on the construction side.

As a solution swaged coupling devices have been proposed. Therein, high mechanical force is applied to the surface of the coupling device, thereby achieving a coupling effect without the need of applying a torque. However, heavy equipment such as hydraulic presses is still needed to apply the forces needed to achieve a coupling effect. This heavy equipment must be handled on the construction site.

Furthermore, multi bolt transitional (MBT) coupling devices are suggested in the prior art to solve the problem of the threaded coupling devices, cf. US 5,046,878 A, US5,664,902 A, US 5,909,980 A. Thereby, instead of applying a force to the surface of the coupling device, the force is generated with a multitude of screws, which are screwed in the wall of the coupling device. Typically, MBT coupling devices have six or more of such screws. MBT coupling devices require exact torquing of these screws with a big torque wrench. Hence, applying an MBT coupling device still needs respectively time and manpower.

Grouted coupling devices have been mainly suggested for pre-cast parts. Thereby, the coupling devices comprise two threaded connections in the cylindrical wall for filling the coupling device and one threaded connection for the rebar in longitudinal connection of the coupling device. Typically, the coupling devices are screwed on a rebar belonging to a rebar network of a future pre-cast part. The coupling device is placed in a way into the pre-cast form to achieve that after pre-casting, the second opening for receiving a rebar and both openings for filling the coupling device are not covered by the pre-cast concrete.

### Summary of the Invention

However, these grouted coupling devices again have the problem of a threaded coupling device. Furthermore, the threaded connections stick out of the coupling device thereby limiting the space in the neighborhood. Moreover, the filling as well as the pre-positioning is not ideal in particular in view of being used in non-pre-cast scenarios. Finally, the cementitious compositions suggested can be improved in view of mechanical strength achieved and material needed.

It has now been surprisingly found out that above-mentioned objects can be achieved with a kit of parts for coupling at least two elongated elements comprising two ends with a coupling device, the kit of parts comprising a coupling device and a multi-component resin mortar system, wherein the coupling device comprises a coupling device body, wherein the coupling device body has an axis, a wall, a hollow body portion having an inner surface, and at least two receiving openings for receiving the at least two elongated elements, and wherein the multi-component resin mortar

system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin.

It has been further surprisingly found out that above-mentioned problem is solved by a coupling device for coupling at least two elongated elements comprising two ends, wherein the coupling device comprises a coupling device body, wherein the coupling device body has an axis, a wall, a hollow body portion having an inner surface, and at least two receiving openings for receiving the at least two elongated elements.

Moreover, it has been surprisingly found out that above-mentioned object is achieved by a method for coupling at least two elongated elements comprising two ends with a coupling device according to the present invention, wherein the method comprises the steps of a) Inserting one end of each elongated element into one respective receiving opening of the at least two receiving openings of the coupling device, b) Putting load on the load-transition elements of the coupling device, thereby putting load on each end of the at least two elongated elements, c) Filling the hollow body portion of the coupling device with a multi-component resin mortar system, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin, d) Letting the multi-component resin mortar system cure.

Finally, it has been surprisingly found out that above-mentioned object is achieved by each of the uses as described in the following: Use of a multi-component resin mortar system for fastening at least two elongated elements comprising two ends in a coupling device according to the present invention, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin. Use of a coupling device according to the present invention for fastening at least two elongated elements comprising two ends with a multi-component resin mortar system wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin. Use of a kits of parts according to the present invention for fastening at least two elongated elements comprising two ends.

It has been found out that the above-mentioned kit of parts, coupling device, method and uses have the advantage to provide coupling means for rebars on a construction site, which are very easy to handle and provide improved fastening properties. In particular, they remove the need for heavy equipment or tedious on-site modification of the rebars. Furthermore, it has been found that the multi-component mortar comprising a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin provides many advantages when used to glue rebars into a steel sleeve to connect them compared to the established methods. In particular, these advantages are improved slip reducing the risk of not being compatible with different rebar geometries. Other advantages are improved inner strength and reduced shrinkage allowing for the usage of shorter coupling device sleeves, which saves material and cost for the coupling device. Finally, high fire resistance allows for a design with lower concrete coverage, which again saves a lot of raw material and labor costs on jobsites.

## Short Description of the Figures

Figure 1 is a schematic representation of a threaded coupling device known from the prior art.

Figure 2 is a schematic representation of a swaged coupling device known from the prior art.

Figure 3 is a schematic representation of an MBT coupling device known from the prior art.

Figure 4 is a schema showing the geometrical principle underlying the calculation method for the shrinkage behavior as used herein.

**Definitions**

The term *"coupling device"* device as used herein denotes a device for coupling together two or more elongated members, preferably reinforcement bars (rebars). In the majority of cases, a coupling device is suitable for coupling two elements in an axial manner. However, it may also be suitable for coupling more than two elements together, such as the formation of T-junctions or Y-junctions. Furthermore, not always an axial coupling is desired, but a coupling in an angle. It should also be appreciated that there are applications when the elements required to be joined differ in shape and size. This may include joining bars of different cross-sectional area, different shape, or different grades of material, or different deformation patterns. Preferably, the coupling device comprises at least one sleeve, which preferably is a tubular shaped sleeve. Also preferably, the material of the sleeve is a metal, preferably steel. It should be understood that in case of a coupling device for coupling two elongated members in an axial manner, the coupling device preferably comprises just one sleeve, preferably a tubular sleeve. However, in case an angled connection should be achieved and/or more than two elongated members should be coupled, the coupling device may comprise respectively more than one sleeve, preferably more than one tubular sleeve. The coupling devices known from the prior art can have fastening means, in particular screws extending through a hole with a thread in the wall of the sleeve. Furthermore, the coupling devices known from the prior art can have threads for engaging with threads on the elongated members.

Ther term *"reinforcement bars"* or *"rebars"* as used herein denotes a steel bar used as a tension device in reinforced concrete and reinforced masonry structures to strengthen and aid the concrete under tension. Concrete is usually strong under compression but has low tensile strength. The application of rebars significantly increases the tensile strength of such structures. Usually, the surface of rebars comprises a continuous series of features such as ribs, lugs or indentations to promote a better bond with the concrete and reduce the risk of slippage. The most common type of rebar is carbon steel, typically consisting of hot-rolled round bars with deformation patterns embossed into its surface. Steel and concrete have similar coefficients of thermal expansion, so a concrete structural member reinforced with steel will experience minimal differential stress as the temperature changes.

The term *"precasting"* or *"precast structure"* as used herein denotes a method for producing a construction product or the product itself, wherein the method comprises casting concrete in a reusable mold followed by curing the concrete in the form in a controlled environment. The so produced precast structures are usually transported to the construction site and connected to other parts. For a strong connection, the precast structures often have coupling devices embedded for receiving reinforcement bars from other parts.

The term *"mortar"* or *"mortar composition"* or "resin mortar composition" as used herein denotes a workable paste, which binds after a given time. Preferably, resin mortars comprise a resin and a filler and become hard when cured, resulting in a rigid aggregate structure.

The term *"hydraulic binder"* as used herein denotes the component in a mortar mixture, which cures, i.e. hardens, over time, wherein the hydraulic binder cures by hydration, i.e. by absorbing water from the environment. This differentiates a hydraulic binder from other binders, which may e.g. absorb carbon dioxide from the environment for curing. Hydraulic binders are for example Roman cement, Portland cement, hydraulic lime, or aluminous cement.

The term *"epoxy resin"* as used herein denotes a compound or the combination of two or more compounds comprising a reactive epoxy group, also called oxirane group. Such an epoxy group is shown below:

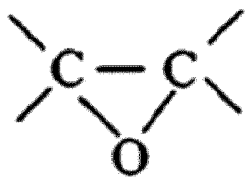

The term *"aliphatic compounds"* as used herein denotes acyclic or cyclic, saturated or unsaturated carbon compounds, except aromatic compounds.

The term *"alicyclic compounds"* as used herein denotes compounds having a carbocyclic ring structure, except benzoyl derivatives or other aromatic systems.

The term *"aromatic compounds"* as used herein denotes compounds following the Hückel (4n+2) rule.

The term *"amines"* as used herein denotes compounds that are derived by exchanging one, two, or three hydrogen atoms with hydrocarbon groups of ammonia and have the general structures $RNH_2$ (primary amines), $R_2NH$ (secondary amines) and $R_3N$ (tertiary amines) (IUPAC. Compendium of Chemical Terminology, 2nd ed. (the "Gold Book"). Compiled by A. D. McNaught and A. Wilkinson. Blackwell Scientific Publications, Oxford (1997)).

The term *"styrenated phenols"* as used herein denotes the reaction products (electrophilic substitution products)

of phenols (such as phenol, pyrocatechol, resorcinol, hydroquinone, hydroxyhydroquinone, phloroglucinol, pyrogallol, o-cresol, m-cresol or p-cresol, especially phenol) with styrene or styrene analogues, such as vinyltoluene, divinylbenzene or 4-vinylpyridine, especially with styrene, especially "*styrenated phenol*" itself (reaction product of styrene and phenol; CAS Reg. No. 61788-44-1), which, by way of example, can comprise mixtures of compounds or individual compounds of the following formulae:

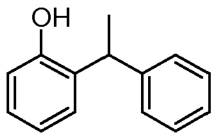 , 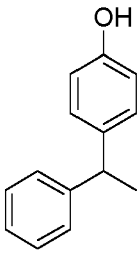 , 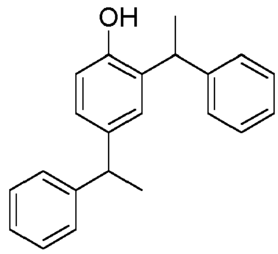 , 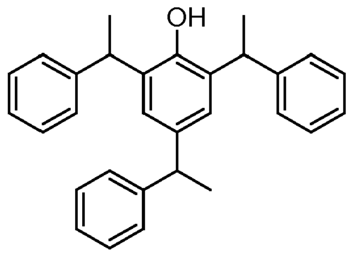

or 2,6-distyryl phenol, and also oligo- and poly-styrene portions or compounds (oligomeric or polymeric products obtained from cationic polymerisation of styrenes in phenols), for example of the following formula:

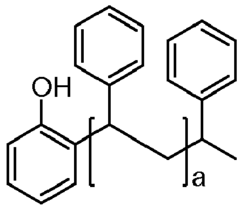

wherein a is 1 or a larger whole number, or branching products - in general, mixtures of a plurality of products formed during the reaction (including poly-substituted products) are obtained, so that the mentioned formulae are at most to be understood as being exemplary and are not necessarily - at least not in all cases - obtained as such.

The term *"phenolic lipids"* as used herein denotes a class of natural products that includes long aliphatic chains and phenolic rings. The phenolic lipid is preferably selected from alkyl catechols, alkyl phenols, alkyl resorcinols and anacardic acids. The at least one phenolic lipid is particularly preferably an alkylphenol selected from propylphenol, butylphenol, amylphenol, octylphenol, nonylphenol, dodecylphenol and cardanol-based compounds.

The term *"multi-component resin mortar system"* as used herein denotes a system comprising several components stored separately from each other, so that curing of the ingredients comprised in the components occurs only after all the components have been mixed together, wherein the components comprise compounds which form a resin when being brought together.

The terms "a" or "an" as articles preceding a chemical compound class mean that one or more compounds falling under that chemical compound class may be meant. In a preferred embodiment, these articles mean only a single compound, the term *"at least one"* means numerically *"one or more".* In a preferred embodiment, the term numerically means "one", the terms *"include"* and *"comprising"* mean that there may be other components in addition to those mentioned. These terms are meant inclusively and therefore include *"consisting of*"*.* "*Consisting of*" is meant conclusively and means that no further constituents may be present. In an embodiment, the terms *"comprise"* or *"comprising"* mean *"consisting of*", a range delimited by numbers, e.g., *"from* 80 °C *to* 120 °*C*" means that the two corner values and each value within that range are individually disclosed.

**Detailed Description of the Invention**

As set out above, the present invention is concerned with a kit of parts, a coupling device, a method for coupling and several uses, which will be further explained in detail in the following. It should be understood that, while it is referred herein to reinforcing bars in concrete as a potential application for a coupling method, it should be appreciated that many other applications require coupling of elements in an axial manner, such as steel light columns, scaffolding elements, pipes, cables, and so on. Thus, the reference to reinforcing bars herein should not be seen as limiting to an application in concrete.

*Coupling device of the invention*

As also stated already above, the present invention is also concerned with a coupling device for coupling at least

two elongated elements comprising two ends. In alignment with the most general embodiment of the kits of parts of the present invention, the coupling device comprises

a coupling device body, wherein the coupling device body has an axis, a wall, a hollow body portion having an inner surface, and at least two receiving openings for receiving the at least two elongated elements.

Preferably, the coupling device body comprises at least one support element on the inner surface of the hollow body portion. This achieves a central position of the elongated element in the coupling device. Furthermore, recessions are produced in the wall of the coupling device, which further enhance the excellent adhesion properties of the multi-component resin mortar system on the surface of the coupling device.

Hence, the coupling device can be suitable to couple more than two elongated elements. In this case, the device body will have at least two axes. It should be understood that in one preferred embodiment thereof two elongated elements are connected axially, thereby forming one axis, and a third elongated element is connected in an angle thereto, preferably perpendicular thereto forming a T-junctions. In another preferred embodiment thereof, none of the elongated elements form an axial coupling, but rather all are coupled in an angle to each other, preferably in an angle of 60°, thereby forming an Y-junction. However, preferably, the coupling device according to the present invention is suitable for receiving two elongated elements and thus the at least two receiving openings are two receiving openings.

Preferably, the wall of the coupling device of the present invention further comprises at least two load-transition openings, wherein each load-transition opening comprises one load-transition element, wherein the at least one support element on the inner surface of the hollow body portion is positioned opposite to at least one of the at least two load-transition openings. This ensures that the elongated elements are fixed in an ideal position when the resin mortar composition is curing. Ideally, the elongated elements should not be able to move inside the coupling device during curing. It should be further noted that the load-transition elements need to be only suitable for applying a load to the elongated element to keep it in position in contrast to coupling devices in the prior art, in which a load has to be applied to allow for force transition in the concrete structure after the concrete outside of the coupling device is cured.

In another preferred embodiment of the present invention, the of the wall of the coupling device further comprises a filling opening for filling the coupling device body. This has the advantage that the multi-component resin mortar composition can be inserted from a central point inside the coupling device. Thereby, it is achieved that the application of multi-component resin mortar system material in the coupling device is facilitated, in particular in the case when the elongated elements have already been positioned and preferably fixated by load-transition elements in the coupling device. The multi-component resin mortar system can be applied preferably with pressure into the filling opening thereby progressing towards the receiving openings of the coupling device. Thereby, inclusion of gas bubbles in the resin mortar composition can be avoided. Furthermore, the amount of mortar material to be used can be efficiently controlled and waste of material can be reduced or even eliminated. Preferably, the filling opening is positioned to have the same distance to each of the at least two receiving openings of the coupling device body, preferably is positioned at the center of gravity of the coupling body. This ensures that the multi-component resin mortar system material is inserted in the middle of the coupling device resulting in the same time needed for the material to progress towards the receiving openings. Thus, such a design improves the material used, as the material will arrive at the same time at each receiving opening. Even more preferably, the filling opening of the coupling device of the present invention comprises a hollow pin. The hollow pin has the advantage that elongated elements can be centered below the filling opening. After fixation of the elongated elements, the hollow pin can be removed from the filling opening for injection of the multi-component mortar.

As set out above, the coupling device according to the present invention is suitable for coupling two elongated elements. In such a preferred embodiment, the at least two load transition openings are at least four load-transition openings, preferably are four load-transition openings. In case of coupling only two elongated elements, the number of two load-transition elements per coupled elongated elements is sufficient to hold the elongated elements in position within the coupling device until the resin mortar composition filled therein has been cured. Furthermore, the lower the number of load-transition elements is, the faster the time for coupling, as less load-transition elements have to be fixated by the construction worker, and less material and energy is needed to produce the coupling device.

Preferably, the at least two load-transition openings of the coupling device according to the present invention are positioned on a straight line, wherein the straight line is parallel to the axis of the coupling device body. More preferably, also the filling opening of the coupling device according to the present invention is positioned on the straight line, preferably in that the same number of load-transition openings are positioned between the filling opening and each of the at least two receiving openings. This has the advantage that the handling of the coupling device, i.e. fixating and filling, can be achieved from one side, which reduces the working time.

In a preferred embodiment of the coupling device of the present invention, each of the at least two load-transition openings comprises a thread and each of the load-transition elements of the at least two load-transition openings is a screw having a thread counter fitting the thread of each of the at least two load-transition openings. Preferably, each of the screws has a tapered tip. This improves the fixating process of the elongated member, as the tip can deform the surface of the elongated member and thus provides counter measures against rotation of the elongated element in the coupling device, thereby reducing slip.

Preferably, each of the at least two receiving openings and/or the filling opening of the coupling device of the present invention comprises a seal, wherein the seal is preferably made from a polymer composition. This has the advantage that none of the resin mortar composition, which is injected into the coupling device, leaves the coupling device at the receiving ends. Therefore, waste of material is reduced or even eliminated.

In the coupling device of the present invention, the support elements preferably are protrusions from the inner surface of the hollow body portion, preferably are ribs extending longitudinal to the axis of the coupling device body. The resin mortar composition resulting from the multi-component resin mortar system as used in the present invention has not very high adhesion properties to steel. Hence, the support elements defined pockets in the coupling device, which are filled by the resin mortar composition, and which serve as fixing elements after curing. Longitudinal ribs have the additional effect of reducing or even preventing rotation of the elongated elements within the coupling device.

Likewise, preferably, the inner surface of the hollow body portion of the coupling device of the present invention comprises undercuts extending perpendicularly to the axis of the coupling device body. This has the effect of reducing or preventing longitudinal movement and thus slip of the elongated element in the coupling device. However, even if such perpendicular undercuts are not present, elongated elements in form of rebars often have perpendicularly extending rips. If such a rebar is fixated within a coupler, respective perpendicular undercuts are formed.

The preferred shape of the coupling device body of the coupling device of the present invention is a substantially cylindrical shape, preferably a cylindrical shape, and the axis of the coupling device body is preferably the symmetry axis of the cylindrical shape. This ensures an optimized material to coupling effect ratio and further saves material in the production of the coupling device. In terms of dimensions, the cylindrical shape is preferably formed to receive the elongated elements, preferably rebars. As the tensile strength of the coupler varies with its diameter, usually longer couplers are needed for rebars with larger diameter. Hence, preferably, the outer diameter of the coupler is in the range of from 1.5 to 3.0 times, preferably 1.8 to 2.5 times, the diameter of the elongated element, preferably rebar. Also preferably, the length to diameter (L/D) ratio of the coupler is preferably in the range of from 4 to 8, more preferably from 5 to 7, and most preferably from 6 to 6.5.

Generally, the material used for producing the coupling device depends on the purposed of the coupling of the elongated elements. In a preferred embodiment, the elongated elements are rebars for use in construction works, which are usually made from steel. Hence, preferably, also the coupling device body of the coupling device of the present invention is made from steel, preferably ductile cast iron.

*Multi-component mortar system of the invention*

The present invention is concerned with a kit of parts comprising a multi-component resin mortar system, a method of coupling at least two elongated elements using a multi-component resin mortar system and the use of a multi-component resin mortar system for coupling elongated elements. Hence the multi-component resin mortar system of the present invention is described in more detail in the following.

The multi-component resin mortar system according to the invention comprises, preferably consists of, a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin, preferably at least one amine reactive to epoxy groups having an NH functionality of 2 or greater.

*a) Resin component (A)*

The resin component (A) of the multi-component resin mortar system according to the present invention typically comprises liquid and solid constituents. As a typically liquid component, at least one epoxy resin-based reactive synthetic resin ("resin component (A) ") is usually included as the reactive resin.

Epoxy resin-based reactive synthetic resins as used in the multi-component resin mortar system according to the present invention are many commercially available compounds known for this purpose to a person skilled in the art, which on average comprise more than one epoxide group, preferably two epoxide groups, per molecule. These epoxide compounds (epoxide resins) may thereby he both saturated as well as unsaturated, and aliphatic, alicyclic, aromatic or heterocyclic, and can also have hydroxyl groups. They may also comprise those substituents which under mixing or reaction conditions do not cause any interfering side reactions, for example alkyl or aryl substituents, ether groups and similar. Within the scope of the invention, trimeric and tetrameric epoxides are also suited.

Suitable polyepoxide compounds are described for example in Lee, Neville, Handbook of Epoxy Resins 1967. Preferably, the epoxides involve glycidyl ethers, which are derived from multivalent alcohols, particularly biphenols and novolacs, especially those having an average glycidyl group functionality of 1.5 or greater, especially 2 or greater, for example from 2 to 10. The epoxide resins have an epoxy equivalent weight (EEW) of 120 to 2,000 g/EQ, preferably from

140 to 400 g/EQ. Mixtures of multiple epoxide resins may also be used. Particularly preferred are liquid diglycidyl ethers on the basis of bisphenol A and/or F with an epoxy equivalent weight of 180 to 190 g/EQ. Mixtures of multiple epoxide resins may also be used.

Examples of polyhydric phenols used to prepare epoxy resins include resorcin, hydroquinone, 2,2-bis-(4-hydroxyphenyl)-propane (bisphenol A), isomeric mixtures of dihydroxyphenylmethane (bisphenol F), tetrabromobisphenol A, novolacs. 4,4'-dihydroxyphenylcyclohexane, and 4,4'-dihydroxy-3,3'-dimethyldiphenylpropane.

Epoxy-based monomers/resins useful in the present invention include, without limiting the scope of the invention, diglycidyl ethers of bisphenol A and F, and aliphatic and cycloaliphatic epoxides. Other examples include hexanediol diglycidyl ethers, trimethylolpropane triglycidyl ethers, bisphenol A epichlorohydrin resins, and/or bisphenol F epichlorohydrin resins, for example, having an average molecular weight of $MW \leq 2000$ g/mol. Liquid diglycidyl ethers based on bisphenol A and/or F with an EEW of 150 to 300 g/EQ are preferred.

The EEW (epoxide equivalent weight) values are usually indicated on the starting materials by the manufacturers, or they are determined or calculated according to known methods. They indicate the amount in g of resin comprising 1 mole of epoxy groups: EEW = MW / functionality.

The epoxide resin content is > 0 to 100 wt.-%, preferably 10 to 70 wt.-%, more preferably 10 to 65 wt.-%, and particularly preferred 30 to 60 wt.-%, relative to the total weight of resin component (A).

Besides the epoxide resins, the resin component (A) as comprised in the multi-component resin mortar system can comprise at least one reactive diluent. In a multi-component resin mortar system, the reactive diluent should not be present in the hardener component, but preferably only in the resin component (A). As reactive diluents, one uses glycidyl ethers of aliphatic, alicyclic, or aromatic mono- or particularly polyalcohols are used, such as monoglycidyl ether e.g., o-cresyl glycidyl ether, and/or particularly glycidyl ether with an epoxoid functionality of at least 2, such as 1,4-butane dioldiglycidyl ether (BDDGE), cyclohexanedimethanol diglycidyl ether, hexanediol diglycidyl ether and/or particularly tri- or higher glycidyl ethers, e.g., glycerol triglycidyl ether, pentaerythritol tetraglycidyl ether or trimethylolpropane triglycidyl ether (TMPTGE), or also mixtures of two or more of these reactive diluents preferably triglycidyl ether, particularly preferred as a mixture of 1,4-butanediol diglycidyl ether (BDDGE) and trimethylolpropane triglycidyl ether (TMPTGE).

The reactive diluents are present in a quantity of 0 to 60 wt.-%, particularly from 1 to 20 wt.-%, relative to the total weight of resin component (A).

*b) Hardener component (B)*

The hardener component (B) of the multi-component resin mortar system comprises at least one hardener, wherein the hardener comprises at least one compound commonly used for epoxy curing, i.e. which serves as a reaction partner in polyaddition. The other additives of the hardener component (B) of the multi-component resin mortar system according to the present invention can be provided, for example, in a weight proportion totaling 0.01 to 70 wt.-%, e.g., 1 to 40 wt.-%, based on the hardener component (B).

The compounds commonly used for epoxy curing are in particular those having two or more groups selected from amino, imino, and mercapto, for example corresponding amines, thiols, or aminothiols, or mixtures thereof, for example as mentioned in Lee H and Neville K, "Handbook of Epoxy Resins" (New. York: McGraw-Hill), 1982.

In the hardener component (B) of the multi-component resin mortar system according to the present invention, one or more amines, preferably polyamines, may be used as reactive hardener components. Suitable amines for use in the curing agent are, in particular, those customary for epoxy-amine systems and known to those skilled in the art, selected from aliphatic, alicyclic and aromatic amines, the amine having on average at least two reactive hydrogen atoms bonded to a nitrogen atom per molecule. This includes polyamines having at least two amino groups in the molecule.

Suitable amines, without limiting the scope of the invention, include: 1,2-diaminoethane(ethylenediamine), 1,2-propanediamine, 1,3-propanediamine, 1,4-diaminobutane, 2,2-dimethyl-1, 3-propanediamine(neopentanediamine), diethylaminopropylamine (DEAPA), 2-methyl-1, 5-diaminopentane, 1,3-diaminopentane, 2,2,4- or 2,4,4-trimethyl-1, 6-diaminohexane and mixtures thereof (TMD), 1-Amino-3-aminomethyl-3, 5,5-trimethylcyclohexane, 1,3-bis(aminomethyl) cyclohexane, 1,2-bis(aminomethyl)cyclohexane, hexamethylenediamine (HMD), 1, 2- and 1,4-diaminocyclohexane (1,2-DACH and 1,4-DACH), bis(4-aminocyclohexyl)methane, bis(4-amino-3-methylcyclohexyl)methane, diethylenetriamine (DETA), 4-Azaheptane-1, 7-diamine, 1,11-diamino-3, 6,9-trioxundecane, 1,8-diamino-3, 6-dioxaoctane, 1,5-diamino-methyl-3-azapentane, 1,10-diamino-4, 7-dioxadecane, bis(3-aminopropyl)amine, 1,13-diamino-4,7, 10-trioxatridecane, 4-aminomethyl-1, 8-diaminooctane, 2-butyl-2-ethyl-1, 5-diaminopentane, N, N-bis-(3-aminopropyl)methylamine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornandiamine), dimethyldipropylenetriamine, dimethylaminopropyl-aminopropylamine (DMAPAPA), 3-aminomethyl-3, 5,5-trimethylcyclohexylamine (isophoronediamine (IPD)), diaminodicyclohexylmethane (PACM), mixed polycyclic amines (MPCA) (e.g. E.g., Ancamine 2168), dimethyldiaminodicyclohexylmethane (Laromin® C260), 2,2-bis(4-aminocyclohexyl)propane.

Polyamines, which are preferably used in the hardener component (B) of the multi-component resin mortar system according to the present inventio, are 2-methylpentanediamine (DYTEK® A), 1-amino-3-aminomethyl-3, 5,5-trimethylcyclohexane (IPD), 1,3-benzenedimethanamine (m-xylylenediamine, mXDA), 1,4-benzenedimethanamine (p-xylylenediamine, PXDA), 1,6-diamino-2, 2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), 1,3-bisaminomethylcyclohexane (1,3-BAC), (3(4),8(9)bis(aminomethyl)dicyclo[5. 2.1. 02,6]decane (mixture of isomers, tricyclic primary amines; TCD diamine), 1,14-diamino-4, 11-dioxatetradecane, dipropylenetriamine, 2-methyl-1, 5-pentanediamine, N, N'-dicyclohexyl-1, 6-hexanediamine, N, N'-dimethyl-1, 3-diaminopropane, N, N'-diethyl-1, 3-diaminopropane, N, N-dimethyl-1, 3-diaminopropane, secondary polyoxypropylenediamines and triamines, 2,5-diamino-2, 5-dimethylhexane, bis(aminomethyl)tricyclopentadiene, 1,8-diamino-p-menthane, bis-(4-amino-3, 5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, or piperazine.

The one or more amines are preferably present in hardener component (B) of the multi-component resin mortar system according to the present invention in an amount in the range of from 10 to 90 wt.-%, more preferably from 35 to 60 wt.-%, based on the total weight of hardener component (B).

In addition to one or more amines, the hardener component (B) according to the present invention may further comprise a salt (S) as an accelerator. Preferably, the salt (S) is at least one salt selected from the group consisting of salts of nitric acid, salts of nitrous acid, salts of halogens, salts of trifluoromethanesulfonic acid, and combinations thereof. More preferably, the salt (S) is at least one salt selected from the group consisting of salts of nitric acid, salts of halogens, salts of trifluoromethanesulfonic acid, as well as combinations thereof. It has been found to be particularly preferred that the salt (S) is selected from the group consisting of nitrates ($NO_3^-$). iodides ($I^-$), triflates ($CF_3SO_3^-$), as well as combinations thereof.

Suitable salts of nitric acid are in particular alkali metal nitrates, alkaline earth metal nitrates, lanthanoid nitrates, aluminum nitrate, ammonium nitrate as well as mixtures thereof. Corresponding salts of nitric acid are commercially available. Preferably, alkali metal nitrates and/or alkaline earth metal nitrates are used as salts of nitric acid, such as $Ca(NO_3)_2$ or $NaNO_3$. It is also possible to use as salt (S) a solution of a salt in nitric acid such as a solution comprising $Ca(NO_3)_2/HNO_3$. To prepare this solution, CaCOs is dissolved in $HNO_3$.

Suitable salts of nitrous acid are in particular alkali metal nitrites, alkaline earth metal nitrites, lanthanoid nitrites, aluminum nitrite, ammonium nitrite and mixtures thereof. Corresponding salts of nitrous acid are commercially available. Preferably, alkali metal nitrites and/or alkaline earth metal nitrites are used as salts of nitrous acid, such as $Ca(NO_2)_2$.

Suitable salts of the halogens are in particular alkali metal halides, alkaline earth metal halides, lanthanide halides, aluminum halides, ammonium halides and mixtures thereof. Corresponding salts of the halogens are commercially available. Preferably, the halogens are selected from the group consisting of chloride, bromide, iodide as well as mixtures thereof, whereby iodides in particular are preferably used.

Suitable salts of trifluoromethanesulfonic acid are in particular alkali metal triflates, alkaline earth metal triflates, lanthanide triflates, aluminum triflate, ammonium triflate as well as mixtures thereof. Corresponding salts of trifluoromethanesulfonic acid are commercially available. Preferably, alkali metal nitrates and/or alkaline earth metal nitrates are used as salts of the trifluoromethanesulfonic acid, such as $Ca(CF_3SO_3)_2$.

In principle, the cations of the salt (S) can be organic, inorganic or a mixture thereof. Preferably, the cation of the salt (S) is an inorganic cation.

As organic cations, for example, ammonium cations substituted with organic radicals, such as tetraethylammonium cations substituted with $C_1$-$C_6$ alkyl radicals, can be considered.

Preferably, cations selected from the group consisting of alkali metals, alkaline earth metals, lanthanides, aluminum, ammonium ($NH_4^+$) as well as mixtures thereof, more preferably from the group consisting of alkali metals, alkaline earth metals, aluminum, ammonium as well as mixtures thereof and even more preferably from the group consisting of alkali metals, alkaline earth metals, aluminum as well as mixtures thereof are considered as inorganic cations of the salt (S). It is particularly preferred that the cation of salt (S) is selected from the group consisting of sodium, calcium, aluminum, ammonium, and mixtures thereof.

The salt (S) may be included in hardener component (B) of the multi-component resin mortar system according to the present invention in an amount of e.g., up to 12 wt.-%, such as up to 10 wt.-, preferably up to 8 wt.-%, based on the total weight of hardener component (B).

Thus, the following compounds or components are particularly suitable as salt (S): $Ca(NO_3)_2$ (calcium nitrate, usually used as $Ca(NO_3)_2$ tetrahydrate), a mixture of $Ca(NO_3)_2/HNO_3$, $KNO_3$ (potassium nitrate), NaNOs (sodium nitrate), $Mg(NO_3)_2$ (magnesium nitrate, usually used as $Mg(NO_3)_2$ hexahydrate), $Al(NO_3)_3$ (aluminum nitrate, usually used as $Al(NO_3)_3$ nonahydrate), $NH_4NO_3$ (ammonium nitrate), $Ca(NO_2)_2$ (calcium nitrite), NaCl (sodium chloride), NaBr (sodium bromide), NaI (sodium iodide), $Ca(CF_3SO_3)_2$ (calcium triflate), $Mg(CF_3SO_3)_2$ (magnesium triflate), $Li(CF_3SO_3)_2$ (lithium triflate).

Hardener component (B) of the multi-component resin mortar system of the invention may comprise one or more salts (S). The salts may be used singly or in a mixture of two or more of the said salts.

To improve the solubility properties of the salt (S) in the hardener composition (B), it may be provided that the salt (S) is dissolved in a suitable solvent and used accordingly as a solution. Organic solvents such as methanol, ethanol and glycerol are suitable for this purpose. However, water can also be used as solvent, if necessary, also in mixture with the aforementioned organic solvents. To prepare the corresponding salt solutions, the salt (S) is added to the solvent and stirred, preferably until completely dissolved.

In addition, hardener component (B) of the multi-component resin mortar system according to the present invention may optionally include co-accelerators used in combination with the above salt (S).

Examples of suitable co-accelerators are in particular tris-2,4,6-dimethylaminomethylphenol, 2,4,6-tris(dimethylamino)phenol and bis[(dimethylamino)methyl]phenol. A suitable co-accelerator mixture comprises 2,4,6-tris(dimethylaminomethyl)phenol and bis(dimethylaminomethyl)phenol. Mixtures of this kind are commercially available, for example as Ancamine® K54 (Evonik, Germany).

These co-accelerators are preferably comprised in the hardener component (B) of the multi-component resin mortar system according to the present invention in a weight proportion of from 0.001 to 5 wt.%, based on the total weight of the hardening hardener component (B).

As an alternative, the co-accelerator can be a phenol derivative. The phenol derivative is preferably selected from the group consisting of polyphenols from the group of novolac resins, styrenated phenols, phenolic lipids, and combinations thereof.

Compounds of the following formula are preferably used as polyphenols from the group of novolac resins:

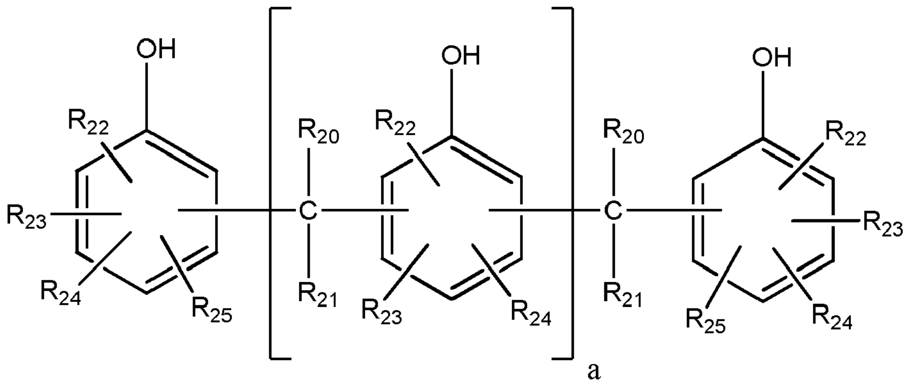

in which
$R_{20}$ and $R_{21}$ each denote, independently of one another, H or $-CH_3$; $R_{22}$, $R_{23}$, $R_{24}$ and $R_{25}$ each denote, independently of one another, H, $-CH_3$ or an aliphatic functional group, preferably a linear, optionally partially unsaturated, unbranched hydrocarbon chain having up to 15 carbon atoms or an alkaryl functional group, preferably $-C_8H_9$; and where a is 0 to 20, preferably 0 to 15.

The polyphenol from the group of novolac resins particularly preferably corresponds to the following formula:

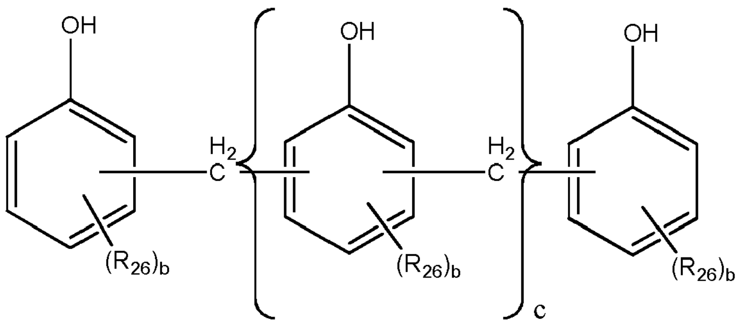

in which $R_{26}$ denotes a $C_1$-$C_{15}$ alkyl group, preferably a methyl group or tert.-butyl group; b is 0, 1 or 2, and is preferably 1; and c is 0 to 15, and is preferably 0 to 6.

The novolac resin comprised in the hardener component (B) of the multi-component resin mortar system according to the present invention very particularly preferably corresponds to the above-presented formula, in which $R_{26}$ denotes $CH_3$ and b is 1 or 2, or $R_{26}$ denotes tert.-butyl or a $C_1$-$C_{15}$ alkyl group and b is 1, and where c is 0 to 15, preferably 1 to 15.

The hardener component (B) according to the multi-component resin mortar system of the invention can

comprise one or more phenol derivatives. The phenol derivatives can be used both individually and in a mixture of two or more of the specified phenol derivatives. The hardener component (B) of the multi-component resin mortar system according to the present invention preferably comprises the phenol derivative in a proportion of from 4 to 25 wt.%, preferably from 10 to 20 wt.%, based on the total weight of the curing agent composition.

In a preferred embodiment, the phenol derivative is at least one polyphenol selected from the group of novolac resins and is combined with a salt (S) selected from the group of nitrates. The weight percent ratio of all phenol derivatives, in particular the polyphenols from the group of novolac resins, to all salts (S) in the hardener component (B) is preferably 250:1 to 1:4, more preferably 40:1 to 1:2.

Alternatively, Mannich bases can be used as hardening agent in hardener component (B) of the multi-component resin mortar system according to the present invention. Suitable Mannich bases are the reaction products of a selected amine and an aldehyde or aldehyde precursor with a phenolic compound selected from the group consisting of phenol or a styrolized phenol, pyrocatechol, resorcinol, styrolized resorcinol, hydroquinone, hydroxyhydroquinone, phloroglucin, pyrogallol, o-cresol, m-cresol, p-cresol, or bisphenols, such as bisphenol A or bisphenol F, and combinations thereof, preferably phenol or a styrolized phenol, styrolized resorcinol or bisphenol A.

The selected amine for preparing the Mannich base has a structure according to the following formula:

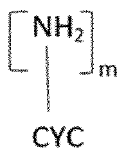

wherein "CYC" means a1) a monocyclic saturated ring having 3 to 12 ring atoms or a2) a bicyclic saturated ring system having 3 to 12 ring atoms per ring, the two rings of the bicyclic saturated ring system being linked to each other via an aliphatic group having 1, 2 or 3 carbon atoms and each of the two rings carrying at least one of the m [$NH_2$] groups, or a3) a fused di- or polycyclic saturated ring system having 6 to 12 ring atoms and m is a positive integer greater than or equal to 2.

The selected amine can also be used in the form of one of its salts. In these cases, one or both hydrogen atoms of the m amino groups [-$NH_2$] are replaced by alkali and/or alkaline earth metals. The use of corresponding salts of the selected amines makes it possible to adjust the solubility properties of the selected amine.

The selected amines for the preparation of the Mannich base are characterized by having at least two $NH_2$ groups directly bonded to different ring atoms. Preferably, the selected amines have exactly two $NH_2$ groups directly bonded to different ring atoms. Accordingly, in a preferred embodiment, m is equal to 2.

The definitions of "CYC" described in variants a1), a2) and a3) may optionally be methyl- or dimethyl-substituted per ring in each case.

The definitions of "CYC" described in variants a1), a2) and a3) preferably have an aliphatic structure, i.e., the rings and, if appropriate, the linkage of two rings consist only of carbon and hydrogen atoms. However, it is also possible that the rings according to variants a1), a2) and a3) have heteroatoms.

In these cases, the ring in variant a1) or the ring system in variants a2) and a3) may have 0 to 3 nitrogen atoms, 0 to 3 oxygen atoms and 0 to 1 sulfur atoms.

Preferably, the number of ring atoms of the definitions of "CYC" described in variants a1), a2) and a3) 10 is 6 to 9, particularly preferably 6.

Particularly preferably, the selected amine is selected from the group consisting of 1,2-diaminocyclohexane, 1,4-diaminocyclohexane (1,2-DACH and 1,4-DACH), bis(4-aminocyclohexyl)methane (PACM), 4,4'-methylenebis(2-methyl-cyclohexyl-amine) (MACM), 3-aminomethyl-3,5,5-trimethylcyclohexylaminoe (IPDA), 5-(aminomethyl)bicyclo[[2.2.1]hept-2-yl]methylamin (NBDA) and methylcyclohexyldiamine (MCDA).

The selected amines may be used singly or in a mixture of two or more of said selected amines. The amine used for reacting with the aldehyde and the phenolic compound so as to form the Mannich base is preferably one of the above-mentioned amines which are reactive to epoxy groups, and preferably 1,3-benzenedimethanamine (mXDA), 3-amino-methyl-3,5,5-trimethylcyclohexane (IPDA), 1,3-bis(aminomethyl)cyclohexane (1,3-BAC), iaminodicyclohexyl methane (PACM), methylcyclohexyl diamine (mCDA) and 5-(aminomethyl)bicyclo[[2.2.1]hept-2-yl]methylamine (NBDA). The amine is preferably present in excess, such that the Mannich base has free amino groups.

The selected amine can also be an aminosilane selected from the group consisting of 3-aminoalkyltrialkoxysilanes, such as 3-aminopropyl-tri(m)ethoxysilane, 3-aminoalkylalkyl dialkoxysilane, such as 3-aminopropylmethyldi(m)ethoxysilane, N-(aminoalkyl)-3-aminoalkyltrialkoxysilanes, such as N-(2-aminoethyl)-3-aminopropyltri(m)ethoxysilane, N-(aminoalkyl)-3-aminoalkyl-alkyldialkoxysilanes such as N-(2-aminoethyl)-3-aminopropylmethyldi(m)ethoxysilane, 3-[2-(2-aminoethylamino)ethylamino]propyltri(m)ethoxysilane, bis-(gamma-trimethoxysilylpropyl)amine, or mixtures thereof; or also selected from the group consisting of N-cyclohexyl-3-aminopropyltri(m)ethoxysilane, N-cyclohexylaminomethylmethyldiethoxysilane, N-cyclohexylaminomethyltriethoxysilane, 3-ureidopropyltri(m)ethoxysilane, N-methyl[3-(trimethoxysilyl)-propylcarbamate, N-trimethoxysilylmethyl-O-methylcarbamate and N-dimethoxy(methyl)silylmethyl-O-methylcarbamate.

To form the Mannich base, a phenolic compound is reacted with at least one of the selected amines described above and an aldehyde or an aldehyde precursor that yields an aldehyde by decomposition. The aldehyde or aldehyde precursor can advantageously be added to the reaction mixture as an aqueous solution, in particular at an elevated temperature of about 50 °C to 90 °C and reacted with the selected amine as well as the phenolic compound.

As the phenolic compound, phenol or a styrolized phenol, pyrocatechol, resorcinol, styrolized resorcinol, hydroquinone, hydroxyhydroquinone, phloroglucin, pyrogallol, o-cresol, m-cresol, p-cresol, or bisphenols, such as bisphenol A or bisphenol F, and combinations thereof, particularly preferably phenol or a styrolized phenol, styrolized resorcinol or bisphenol A are used to form the Mannich base.

The aldehyde used to form the Mannich base is preferably an aliphatic aldehyde, particularly preferably formaldehyde. Preferably, trioxane or paraformaldehyde can be used as the aldehyde precursor, which decompose to formaldehyde by heating in the presence of water.

Preferably, the selected amine is present in excess during the reaction with the phenolic compound and the aldehyde, so that the Mannich base has free amino groups.

In another preferred embodiment of the multi-component resin mortar system according to the present invention, the hardener component (B) may also comprise as the hardening agent mixtures of (i) styrenated phenols with (ii) amines. Amines usable in the mixture with styrenated phenols (which amines can be present as such or in salt form) include those mentioned above, especially N,N'-bis(3-amino-n-propyl)piperazine (BAPP), 1,3-bis(aminomethyl)cyclohexane (BAC), N-(2-aminoethyl)piperazine (AEP) or 3-aminomethyl-3,5,5-trimethylcyclohexylamine (isophoronediamine, IPDA), or other low molecular weight polyamines (*"polyamines"* also including diamines), especially oligomeric or monomeric aliphatic, cycloaliphatic, cycloheteroaliphatic, aromatic or araliphatic diamines, such as especially xylylenediamines, more especially m-xylylenediamine (1,3-bis(amino-methyl)benzene, MXDA); aliphatic polyamines, for example $C_1$-$C_{10}$ alkane-di- or -poly-amines, e.g. 1,2-diaminoethane, trimethylhexane-1,6-diamine, diethylenetriamine or triethylenetetraamine; oligomeric diamines of the formula $H_2N-(CH_2)_i-NH-[(CH_2)_jNH]_k-(CH_2)_l-NH_2$, wherein i, j and l are each independently of the others from 2 to 4 and k is 0, 1 or 2, especially *"triethylenetetramine"* (TETA, i.e. N,N'-bis(2-aminoethyl)ethylenediamine) or tetraethylenepentamine (TEPA); cycloaliphatic amines, such as 1,2-diaminocyclohexane or bis(aminomethyl)tricyclodecane (TCD) or bis(4-aminocyclohexyl)methane (PACM), or amine adducts; or mixtures of two or more thereof; especially mixtures of one or more araliphatic diamines, more especially m-xylylenediamine, with one or more other polyamines, especially BAC, or more especially one or more araliphatic diamines, especially m-xylylenediamine itself, or mixtures of BAC and m-xylylenediamine.

*c) Hybrid hardener component (B')*

Preferably, the hardener component (B) comprised in the multi-component resin mortar system is a hybrid hardener component (B') as described in the following. The hybrid hardener component (B') of the multi-component resin mortar system comprises at least one hybrid hardener, wherein the hybrid hardener comprises at least one amine and at least one novolac. It has been found out that such a hybrid hardener component (B') leads to significantly improved properties of the resin mortar composition and as such of the coupling device and the coupling method according to the present invention, and in addition allows a much lower content of compounds requiring labeling, such as free phenol or its derivatives, such as bisphenol A, and mXDA. An additional advantage of the hybrid hardener component (B') is that free phenols, which are commonly added to Mannich base-cured systems as a catalyst, can be completely omitted, whereby the multi-component resin mortar system comprises fewer harmful ingredients.

As set out above, the hybrid hardener component (B') as comprised in the multi-component resin mortar system of the present invention comprises (a) at least one amine selected from among aliphatic, alicyclic, or aromatic amines, wherein the amine averages at least two reactive hydrogen atoms, bonded to a nitrogen atom, per molecule, and (b) at least one novolac resin having the general formula (I):

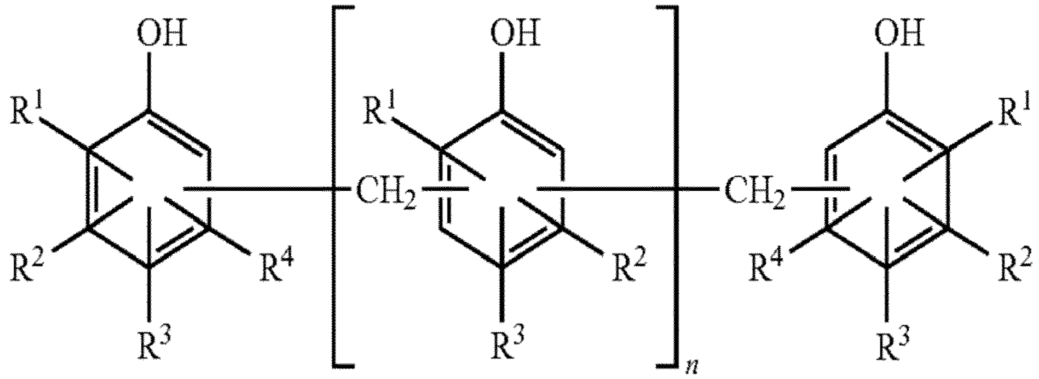

(I)

in which $R^1$, $R^2$, $R^3$ and $R^4$, each independent of each other, are hydrogen or an unbranched or branched $C_1$-$C_{15}$ alkyl radical and n is 1 to 12, as a catalyst.

Preferably, the novolac resins comprised in hybrid hardener component (B') as comprised in the multi-component resin mortar system according to the present invention are those in which $R^1$, $R^2$, $R^3$ and $R^4$ in formula (I) are either hydrogen, or in which one or two of the radicals $R^1$ to $R^4$ is/are the radical $CH_3$, or in which one of the radicals $R^1$ to $R^4$ is the tert-butyl radical or an unbranched or branched $C_1$-$C_{15}$ alkyl radical.

The novolac resin is preferably comprised in a quantity of 10 to 45 wt.-%, more preferably 20 to 45 wt.-%, even more preferably 30 to 45 wt.-%, and most preferably 30 to 40 wt.-%, relative to the total weight of the hybrid hardener component (B'). The quantity shall not exceed 45 wt.-% to retain at room temperature a liquid hybrid hardener composition, which is also sufficiently low-viscosity at low temperatures, to not negatively influence the extraction properties of the curing components of the resin mortar composition. At a quantity of less than 10 wt.-%, the accelerating effect decreases to such an extent that an acceleration is hardly observed anymore, and the positive effect of the hybrid hardener no longer has an influence on the acceleration of the curing reaction at temperatures below 10 °C.

Since the phenolic groups in the novolac resin comprised in the hybrid hardener component (B') as comprised in the multi-component resin mortar system according to the invention are present in a high-molecular form, one can entirely omit using free phenols without having to forego the effect(s) of the phenols, such as accelerating the curing of epoxide compounds using amines.

The amines, which are typical for epoxide-amine systems and known to a person skilled in the art and selected from among aliphatic, alicyclic, and aromatic amines, are suited as hardeners, wherein the amine has on average at least two reactive hydrogen atoms, bonded to a nitrogen atom, per molecule. Included in these are also polyamines with at least two amino groups in the molecule.

Suitable amines, without limiting the scope of the invention, include for example: 1,2-diaminoethane(ethylenediamine), 1,2-propanediamine, 1,3-propanediamine, 1,4-diaminobutane, 2,2-dimethyl-1,3-propanediamine(neopentane diamine), diethylaminopropylamine (DEAPA), 2-methyl-1,5-diaminopentane, 1,3-diaminopentane, 2,2,4- or 2,4,4-trimethyl-1,6-diaminohexane and mixtures thereof (TMD), 1-amino-3-aminomethyl-3,5,5-trimethylcyclohexane, 1,3-bis(aminomethyl)-cyclohexane, 1,2-bis(aminomethyl)cyclohexane, hexamethylenediamine (HMD), 1,2- and 1,4-diaminocyclohexane (1,2-DACH and 1,4-DACH), bis(4-aminocyclohexypmethane, bis(4-amino-3-methylcyclohexyl)methane, diethylenetriamine (DETA), 4-azaheptane-1,7-diamine, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis-(3-aminopropyl)methylamine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2,2,1]hept-2-yl]methylamine (NBDA, norbornandiamine), dimethyldipropylenetriamine, dimethylaminopropyl-aminopropylamine (DMAPAPA), 3-aminomethyl-3,5,5-trimethylcyclohexylamine(isophorondiamine (IPD)), diaminodicyclohexylmethane (PACM), mixed polycyclic amines (MPCA) (e.g., Ancamine® 2168), dimethyldiaminodicyclohexylmethane (Laromine C260), 2,2-bis(4-aminocyclohexyl) propane, and (3(4),8(9)bis(aminomethyl)dicyclo[5,2,1,$0^{2,6}$]decane (isomer mixture, tricyclic primary amines; TCD-diamine).

According to the invention, preferred are polyamines, such as 2-methylpentandiamine (DYTEK A®), 1-amino-3-aminomethyl-3,5,5-trimethylcyclohexane (IPD), 1,3-benzenedimethanamine (m-xylylenediamine, mXDA), 1,4-benzenedimethanamine (p-xylylenediamine, PXDA), 1,6-diamino-2,2,4-trimethylhexane (TMD), diethylenetriamine (DETA), triethylenetetramine (TETA) tetraethylenepentamine (TEPA), pentaethylenehexamine (PEHA), N-ethylaminopiperazine (N-EAP), 1,3-bisaminomethylcyclohexane (1,3-BAC), (3(4),8(9)bis(aminomethyl)dicyclo[5,2,1,$0^{2,6}$]decane (isomer mixture, tricyclic primary amines; TCD-diamine), 1,14-diamino-4,11-dioxa-tetradecane, dipropylenetriamine, 2-methyl-1,5-pentanediamine, N,N'-dicyclohexyl-1,6-hexanediamine, N,N'-dimethyl-1,3-diaminopropane, N,N'-diethyl-1,3-diaminopropane, N,N-dimethyl-1,3-diaminopropane, secondary polyoxypropylene di- and triamines, 2,5-diamino-2,5-dimethylhexane, bis-(aminomethyl)tricyclopentadiene, 1,8-diamino-p-menthane, bis-(4-amino-3,5-dimethylcyclohexyl)methane, 1,3-bis(aminomethyl)cyclohexane (1,3-BAC), dipentylamine, N-2-(aminoethyl)piperazine (N-AEP), N-3-(aminopropyl) piperazine, and piperazine.

The amine can either be used alone or as a mixture of two or more of them, wherein a mixture of two or more of them is preferred. This enables one to forego using toxic 1,3-benzenedimethanamine to the greatest extent possible, or to limit its use substantially, without foregoing its advantageous properties in regard to reactivity and viscosity behavior.

An amine mixture has proven itself advantageous in terms of the simultaneous control over curing speed, load values on various concrete substrates, dimensional stability under heat, and viscosity of the hardener mixture. The viscosity has a direct influence on the extraction forces of the resin mortar composition. The mixture is composed according to the invention of two or more amines, selected from among unbranched or branched $C_2$-$C_{10}$ alkyl diamines, $C_2$-$C_{10}$ polyalkylene-polyamines and aromatic amines, which preferably comprise a substituted or unsubstituted benzene ring.

The alkyldiamines are preferably selected from among 2,2,4- or 2,4,4-trimethyl-1,6-diaminohexane and mixtures thereof (TMD), 1-amino-3-aminomethyl-3,5,5-trimethylcyclohexane (IPDA), 1,3-bis(aminomethyl)-cyclohexane (1,3-BAC), 1,4-bis(aminomethyl)-cyclohexane (1,4-BAC), 2-methyl-1,5-pentandiamine (DYTEK A), (3(4),8(9)bis(aminomethyl)dicyclo[5,2,1,$0^{2,6}$]decane and isomer mixtures thereof (TCD-diamine), aminomethyltricyclo[5,2,1,$0^{2.6}$]decane and isomer mixtures thereof (TCD-amine) and 1,6-hexamethylenediamine.

The polyalkylene-polyamines are preferably selected from among diethylenetriamine (DETA), triethylenetetramine (TETA), tetraethylenepentamine (TEPA) and pentaethylenehexamine (PEHA).

The aromatic amines are preferably selected from among 1,3-benzenedimethanamine (mXDA) and 1,4-benzenedimethanamine (pXDA) and N,N'-dimethyl-1,3-benzenedimethanamine.

The mixture can also consist in each case of two or more amines, selected from among the same group or from different groups. A mixture of two amines can thus be composed of two aliphatic amines, two alicyclic amines, or two aromatic amines. Preferred amine mixtures are mixtures from the different amino groups, e.g., mixtures of at least one dialkyldiamine and at least one aromatic amine or at least one polyalkyl-polyamine or mixtures of at least one polyalkyl-polyamine and at least one aromatic amine or mixtures of at least one dialkyldiamine, at least one polyalkyl-polyamine and at least one aromatic amine.

A particularly preferred mixture of two amines is a mixture of 2-methyl-1,5-pentanediamine and 1,3-benzenedimethanamine, wherein most particularly preferred is a mixture of 28 to 34 percent by weight of 2-methyl-1,5-pentanediamine and 4 to 7 percent by weight of 1 ,3-benzenedimethanamine, each relative to the hybrid hardener.

An alternative, particularly preferred mixture of four amines is a mixture of trimethylhexamethylenediamine (TMD), 2-methylpentanediamine (DYTEK A), triethylenetetramine (TETA) and 1,3-benzenedimethanamine (mXDA), where most particularly preferred is a mixture of 20 to 28 wt.-% of trimethylhexamethylenediamine (TMD), 20 to 28 wt.-% of 2-methylpentanediamine (DYTEK A), 10 to 18 wt.-% of triethylenetetramine (TETA) and 4 to 10 wt.-% of 1,3-benzenedimethanamine (mXDA), each relative to the hybrid hardener.

By means of these mixtures, the content of toxic 1,3-benzenedimethanamine (mXDA) can be kept as low as possible (< 10 wt.-%) and in addition, corresponding combinations enable one to adjust the curing speed, the load values to various concrete substrates, dimensional stability under heat, and the total viscosity.

In a particularly preferred embodiment of the hybrid hardener component (B') as comprised in the multi-component resin mortar system of the invention, the hybrid hardener also comprises an aminophenol or an ether thereof, which has at least one tertiary amino group optionally together with a primary and/or secondary amino group, as a co-catalyst. The co-catalyst is selected from among compounds having the following formula (II),

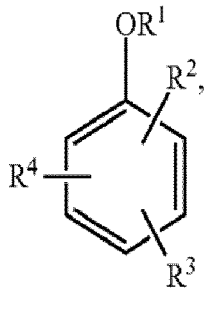

(II)

in which $R^1$ is hydrogen or an unbranched or branched $C_1$-$C_{15}$ alkyl radical, $R^2$ is a $(CH_2)nNR^5R^6$ radical or a $NH(CH_2)$

$nNR^5R^6$ radical, in which $R^5$ and $R^6$ independently of each other are an unbranched or branched $C_1$-$C_{15}$ alkyl radical and n is 0 or 1, $R^3$ and $R^4$ independently of each other are hydrogen or a $(CH_2)nNR^7R^8$ radical or a $NH(CH_2)nNR^7R^8$ radical, and $R^7$ and $R^8$ independently of each other are an unbranched or branched $C_1$-$C_{15}$ alkyl radical and n is 0 or 1.

Preferably, $R^1$ is hydrogen or a $C_1$-$C_{15}$ alkyl radical, particularly an unbranched an unbranched $C_1$-$C_{15}$ alkyl radical, more preferably methyl or ethyl, and most preferably methyl.

Preferably, the phenol having the formula (II) is substituted in the 2-, 4-, and 6-position, i.e., the substituents $R^2$, $R^3$ and $R^4$ are in the 2-, 4- and 6-position.

In the event that $R^5$, $R^6$, $R^7$ and $R^8$ are alkyl radicals, these are preferably a $C_1$-$C_{15}$ alkyl radical, more preferably a methyl or ethyl radical, and most preferably the methyl radical.

As co-catalysts, one can use either a compound or a mixture of at least two compounds having the formula presented above. Preferred is the co-catalyst selected from among 2,4,6-tris(dimethylaminomethyl)phenol, bis(dimethylaminomethyl)phenol and 2,4,6-tris(dimethylamino)phenol. Most preferred is the co-catalyst 2,4,6-tris(dimethylaminomethyl)phenol. A preferred co-catalyst mixture according to the invention comprises 2,4,6-tris(dimethylaminomethyl) phenol and bis(dimethylaminomethyl)phenol. Such mixtures are commercially available as Ancamine® K54 (AirProducts, Belgium), for example.

The tertiary amine is used according to the invention in a quantity of 0.5 to 10 wt.-%, relative to the hybrid hardener.

The ratio of amine or amine mixture to the novolac resin in the hybrid hardener component (B') as comprised in the multi-component resin mortar system according to the invention is 70:30 to 55:45, wherein the content of novolac resin and amine or the amine mixture should be selected in such a manner that the hybrid hardener remains liquid. For example, for the amine mixture of trimethylhexamethylenediamine and 1,3-benzenedimethanamine, the best ratio of amine to novolac resin is 60:40.

Preferably, the hybrid hardener is present in the hybrid hardener component (B') as comprised in the multi-component resin mortar system according to the invention in a quantity of 54 to 84 wt.-% with respect to the total weight of the hybrid hardener component (B').

In a particularly preferred embodiment of the multi-component resin mortar system according to the present invention the hardener component (B) of the multi-component resin mortar system is a hybrid hardener component (B'), wherein the hybrid hardener component (B') comprises a mixture of

(i) at least one amine, selected from among aliphatic, alicyclic and aromatic amines, wherein the amine on average has at least two reactive hydrogen atoms, bonded to a nitrogen atom, per molecule;

(ii) a novolac resin of formula (I):

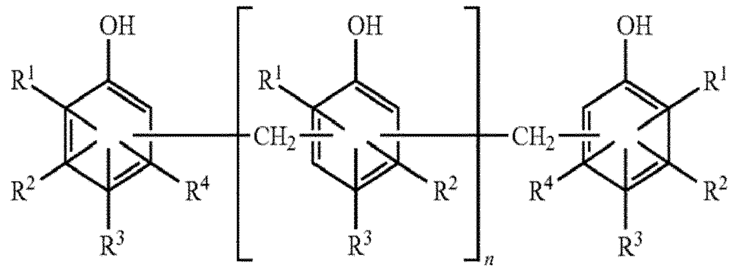

(I)

in which $R^1$, $R^2$, $R^3$ and $R^4$, each independent of each other, are hydrogen or an unbranched or branched $C_1$-$C_{15}$ alkyl radical and n is 1 to 12, wherein the novolac resin is comprised in an amount in the range of from 30 to 45 wt.-% with respect to the total weight of the hybrid hardener component (B'), and

(iii) a compound of formula (II):

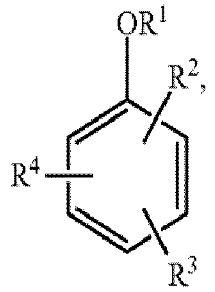

(II)

in which $R^1$ is hydrogen or an unbranched or branched $C_1$-$C_{15}$ alkyl radical, $R^2$ is a $(CH_2)nNR^5R^6$ radical or a $NH(CH_2)nNR^5R^6$ radical, in which $R^5$ and $R^6$ independently of each other are an unbranched or branched $C_1$-$C_{15}$ alkyl radical and n is 0 or 1, $R^3$ and $R^4$ independently of each other are hydrogen or a $(CH_2)nNR^7R^8$ radical or a $NH(CH_2)nNR^7R^8$ radical, and $R^7$ and $R^8$ independently of each other are an unbranched or branched $C_1$-$C_{15}$ alkyl radical and n is 0 or 1.

Even more preferably, in the hybrid hardener component (B') as comprised in the multi-component resin mortar system according to the present invention in formula (I), $R^1$ to $R^4$ are hydrogen, or one or two of the radicals $R^1$ to $R^4$ are $CH_3$ radicals, or one of the radicals $R^1$ to $R^4$ is a tert-butyl radical or an unbranched or branched $C_8$-$C_{15}$ alkyl radical.

In an especially preferred embodiment of the multi-component resin mortar system according to the present invention, in the hybrid hardener component (B') in formula (II), $R^1$ is hydrogen, $R^2$, $R^3$ and $R^4$ are each a $(CH_2)nNR^7R^8$ radical with n=0 or 1, and $R^7$ and $R^8$ are methyl or ethyl, preferably the compound of the formula (II) is tris-2,4,6-(dimethylaminomethyl)phenol.

Preferably, the hybrid hardener component (B') comprises a mixture of at least two amines, selected from among aliphatic, alicyclic and aromatic amines. More preferably, the mixture comprises (i) alkyl diamine and aromatic amines or (ii) alkyl diamines, polyalkylene-polyamine and aromatic amines. Even more preferably, the mixture comprises (i) 2-methyl-1,5-pentanediamine and 1,3-benzenedimethanamine or (ii) trimethylhexamethylenediamine, 2-methyl-pentanediamine, triethylenetetramine and 1,3-benzenedimethanamine. Most preferably, the mixture comprises (i) 28 to 34 wt.-% 2-methyl-1,5-pentanediamine and 4 to 7 wt.-% 1,3 -benzenedimethanamine, or (ii) 20 to 28 wt.-% trimethylhexamethylenediamine, 20 to 28 wt.-% 2-methyl-pentanediamine, 10 to 18 wt.-% triethylenetetramine and 4 to 10 wt.-% 1,3-benzenedimethanamine, each relative to the hybrid hardener component (B').

*d) Resin component (A) and Hardener component (B) / Hybrid hardener component (B')*

The resin component (A) and/or the hardener component (B)/hybrid hardener component (B') may also comprise the conventionally used inorganic aggregates, such as fillers and/or additional inorganic additives.

As fillers, conventional fillers and/or reinforcing agents, preferably mineral or mineral-like fillers, are used, such as silicon dioxide, particularly pyrogenic silicon dioxide, quartz sand and/or quartz powder, glass beads, hollow glass beads, mica, cement, calcium carbonate and/or calcium sulfate, corundum, carbide, metal particles, barite, synthetic and/or natural fibers, and so on.

Additional conceivable additives are also thixotropic agents, such as if applicable organic post-treated pyrogenic silicic acid, bentonite, alkyl- and methyl cellulose, castor oil derivatives or similar, softeners, such as phthalic acid or sebacic acid esters, stabilizers, antistatic agents, thickening agents, flexibilizers, curing catalysts, rheology auxiliary agents, wetting agents, coloring additives, such as dyes or particularly pigments, for example for the differentiating dying of components to better control their mixing, as well as phlegmatising agents, dispersing agents, additional agents for controlling the rate of reaction, wetting agents and similar, or mixtures of two or more of these, possible. Non-reactive diluents (solvents) may also be present, preferably in a quantity of up to 30 wt.-% with respect to the respective component (resin component (A), hardener component (B), hybrid hardener component (B')), for example from 1 to 20 wt.-%, such as lower alkyl ketone, e.g., acetone, di alkyl-lower-alkanoylamide, such as dimethylacetamide, lower alkylbenzenes, such as xylols or toluene, phthalic acid esters or paraffins.

Moreover, the components of the multi-component resin mortar composition may also comprise a bonding agent. By using a bonding agent, the cross-linkage of the drilled hole wall to the resin mortar composition is improved, so that the adhesion in a cured state improves. This is significant for using the two-component resin mortar composition, e.g., in diamond-bored drilled holes, and increases the load values. Suitable bonding agents are selected from the group of silanes, which are functionalized with additional reactive organic groups, such as 3-glycidoxypropyltrimethoxysilane, 3-glycidoxypropyltriethoxysilane, 2-(3,4-epoxycyclohexypethyltrimethoxysilane, N-2-(aminoethyl)-3-aminopropylmethyldiethoxysilane, N-2-(aminoethyl)-3-aminopropyltriethoxysilane, 3-aminopropyltrimethoxysilane, 3-aminopropyltriethoxysilane, N-phenyl-3-aminoethyl-3-aminopropyltrimethoxysilane, 3-mercaptopropyltrimethoxysilane and 3-mercaptopropylmethyl-dimethoxysilane, wherein 3-aminopropyltriethoxysilane is preferred. The bonding agent may be comprised in a quantity of up to 10 wt.-%, preferably 0.1 to 5 wt.-%, relative to the respective component. Preferably the bonding agent is present in component A.

The content of the fillers is preferably in the range of from 0 to 70 wt.-%, preferably from 5 to 55 wt.-%, with respect to the respective component (resin component (A), hardener component (B), hybrid hardener component (B')).

In preferred multi-component resin mortar system according to the present invention, which is a two-component resin mortar system, the resin component (A) comprises:

- 10 to 70 epoxide resin,
- 1 to 20 wt.-% reactive diluents, and
- 1 to 75 wt.-% inorganic fillers,

each with respect to the total weight of the resin component (A), and separate from that in a reaction-inhibiting manner a hybrid hardener component (B') comprising:

- 30 to 45 wt.-% novolac resin of formula (I),
- 54 to 84 wt.-% hardener,
- 0.1 to 10 wt.-% bonding agent, and
- 1 to 75 wt.-% inorganic fillers,

each with respect to the total weight of the hybrid hardener component (B').

The sum of the components of the resin and curing components combined total 100% in each case.

In the multi-component resin mortar system according to the present invention, especially the two-component mortar system, the volume ratio of resin component (A) to hardener component (B) or hybrid hardener component (B') is in the range of from 1:1 to 5:1, preferably 3:1.

*Kit of parts of the invention*

As set out above, the present invention is concerned with a kit of parts for coupling at least two elongated elements comprising two ends with a coupling device, the kit of parts comprising

- a coupling device, and
- a multi-component resin mortar system,

  wherein the coupling device comprises a coupling device body,

  wherein the coupling device body has an axis, a wall, a hollow body portion having an inner surface, and at least two receiving openings for receiving the at least two elongated elements, and

  wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin.

Preferably, the multi-component resin mortar system of the kit of parts of the present invention is a multi-component resin mortar system according to the present invention as detailed above.

Likewise, preferably, the coupling device of the kit of parts of the present invention is a coupling device according to the present invention as detailed above

Preferably, the kit of parts according to the present invention further comprises a filling means for the multi-component resin mortar system. While the coupling devices can be filled without any special device, such filling devices

can facilitate handling, improve precision, and save material. It is also possible to fill the coupling devices before inserting the elongated members. However, in such a case, resin mortar composition material will be pushed out of the coupling device, needs to be removed and is lost. Hence, it is preferred that the kit of part is suitable for filling the coupling device after the rebars have been inserted. It should also be noted that the multi-component mortar, once applied, i.e. mixed with each other, defines a certain period, in which it will be cured. Hence, prefilling the coupling devices has the drawback that the curing time is limited.

After being produced separately, resin component (A) and hardener component (B) of the multi-component resin mortar system are introduced into separate containers, from which they are ejected by means of the filling means and are guided through a mixing device, which is typically a mixing tip of the filling means. The multi-component resin mortar system is preferably a ready-to-use system, whereby resin component (A) and B are separately arranged from each other in a multi-chamber device, such as a multi-chamber cartridge and/or a multi-chamber cylinder or in two-component capsules, preferably in a two-chamber cartridge or in two- component capsules. The multi-chamber system preferably includes two or more foil bags for separating curable resin component (A) and initiator hardener component (B). The contents of the chambers or bags which are mixed by a mixing device, preferably via a static mixer, can be injected into a borehole. The assembly in multiple chamber cartridges or pails or sets of buckets is also possible.

Preferably, the filling means is suitable for pre-mixing the components of the multi-component resin mortar system and applying them into the coupling device. Hence, more preferably, the filling means is a multi-chamber dispenser for instantly mixing and applying the multi-component resin mortar system. Even more preferably, the filling means is a manual dispenser for instantly mixing and applying the multi-component resin mortar system and most preferably, the dispenser is a manual, such as HDM 500, or a cordless multi-chamber dispenser provided by Hilti AG, such as HDE 500. These dispensers allow for an ideal control of mixing an application of the multi-component resin mortar composition.

Furthermore, the kit of parts preferably further comprises a means for putting load on the load-transition elements of the coupling device. This is in particular useful for coupling devices having at least one load-transition element. More preferably, the means for putting load on the load-transition element is suitable for putting a controlled load on the load-transition element, preferably a controlled torque in case the load-transition element is a screw, or a controlled impulse in case the load-transition element is a nail or rivet. Even more preferably, the means for putting load on the load-transition element is a torque wrench, wherein the torque wrench can be a manual torque wrench or an impact wrench. Still even more preferably, the means for putting load on the load-transition element is an impact wrench, and most preferably an impact wrench provided by the Hilti AG, such as ISW 4AT-22, SIW 8-22, SIW 6-22, SIW 10-22, SIW 2-A12, or SIW 22T-A. These impact wrenches allow for an improved and facilitated handling of putting load on the load-transition elements.

Preferably, in the kit of parts according to the present invention, each of the at least two elongated elements is a rebar. More preferably, the at least two elongated elements are only two elongated elements. Most preferably, the kit of parts of the present invention is suitable for axially connecting two elongated elements.

*Method of the present invention*

As also set out above, the present invention is concerned with a method for coupling at least two elongated elements comprising two ends with a coupling device, wherein the method comprises the steps of:

a) Inserting one end of each elongated element into one respective receiving opening of the at least two receiving openings of the coupling device,

b) Putting load on the load-transition elements of the coupling device, thereby putting load on each end of the at least two elongated elements,

c) Filling the hollow body portion of the coupling device with a multi-component resin mortar system, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin,

d) Letting the multi-component resin mortar system cure

wherein the coupling device comprises a coupling device body,

wherein the coupling device body has an axis, a wall, a hollow body portion having an inner surface, and at least two receiving openings for receiving the at least two elongated elements.

Preferably, the multi-component resin mortar system of the method of the present invention is a multi-component resin mortar system according to the present invention as detailed above.

Likewise, preferably, the coupling device of the method of the present invention is a coupling device according to the present invention as detailed above.

Preferably, in the method according to the present invention, the wall of the coupling device further comprises a filling opening for filling the coupling device body, and in step c) of the method according to the present invention, the coupling device is filled through the filling opening.

Preferably, in step d) of the method according to the present invention, the multi-component resin mortar system is cured for at least 5 min, preferably for at least 10 min, more preferably for at least 15 min, most preferably for at least 20 min, in particular for a period in the range of from about 5 to 25 min, preferably in the range of about 10 to 20 min.

*Use of the present invention*

The present invention is concerned with the use of a multi-component resin mortar system for fastening at least two elongated elements comprising two ends in a coupling device, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin, and wherein the coupling device comprises a coupling device body, wherein the coupling device body has an axis, a wall, a hollow body portion having an inner surface, and at least two receiving openings for receiving the at least two elongated elements.

Use of a coupling device for fastening at least two elongated elements comprising two ends with a multi-component resin mortar system, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin, and wherein the coupling device comprises a coupling device body, wherein the coupling device body has an axis, a wall, a hollow body portion having an inner surface, and at least two receiving openings for receiving the at least two elongated elements.

Use of a kits of parts for fastening at least two elongated elements comprising two ends, wherein the kit of parts comprises:

- a coupling device, and
- a multi-component resin mortar system,

  wherein the coupling device comprises a coupling device body,

  wherein the coupling device body has an axis, a wall, a hollow body portion having an inner surface, and at least two receiving openings for receiving the at least two elongated elements, and

  wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin.

Preferably, the multi-component resin mortar system of the uses of the present invention is a multi-component resin mortar system according to the present invention as detailed above.

Likewise, preferably, the coupling device of the uses of the present invention is a coupling device according to the present invention as detailed above.

Finally, preferably, the kit of parts of the uses of the present invention is a kit of parts according to the present invention as detailed above.

## Experimental Part

*Measurement Methods*

*a) Shrinkage behavior*

Mortars were characterized with respect to their shrinkage behavior by using a laser-driven shrinkage cone method by Schleibinger GmbH derived from DIN EN 12390.

For the shrinkage characterization, the mortars were mixed and poured into a Teflon cone. A reflector plate was placed on top of the mortar and the starting distance of the mortar to the laser calibrated as baseline. Then, the distance of the reflector plate to the laser was monitored over a period of 24h.

The shrinkage of the mortars was calculated according to the following formulas (I) to (IV) (with reference to Figure 4):

$$V = \frac{1}{3}\pi r^2 h;\ V' = \frac{1}{3}\pi r'^2 h' \qquad \text{(I)}$$

$$r = h\tan(\alpha) \rightarrow V = \frac{1}{3}(h\tan(\alpha))^2 h \qquad \text{(II)}$$

$$\alpha = const \rightarrow V = ch^3;\ V' = ch'^3 \qquad \text{(III)}$$

$$\frac{V\prime}{V} = \frac{h\prime^3}{h^3} \rightarrow \frac{h\prime}{h} = \sqrt[3]{\frac{V\prime}{V}} \qquad \text{(IV)}$$

wherein

*V*, V' volume of the filled cone (initial and shrunk)

r, *r'* radius of the filled cone at the circular surface at the top (initial and shrunk)

*h, h'* height of the cone (initial and shrunk)

Under the assumption of an isotropic shrinkage radius r and height h of the cone are changed about the same percentage: *h' = k * h* and *r' = k * r* (whereby *k* could be e.g. 80%) during shrinkage.

*b) Inner strength*

Mortars were characterized with respect to their inner strength by a pull-out test of a rebar from a steel sleeve. Therefore, the respective mortar was injected into a Hilti HIS-sleeve of diameter 20 mm and then a rebar with a diameter of 12 mm was inserted to an embedment depth of 50 mm. After curing for a defined time, a confined pull-out test was performed and the force at the failure load was recorded.

*c) Mechanical performance in a seismic test*

The coupling device sleeve used for characterization of the seismic performance of the mortars is made of cast-iron, exhibited a length of 330 mm, an outer diameter of 57 mm, and an inner diameter of 25 mm. The inner part of the coupling device sleeve exhibits 12 pockets with a width of 6 mm and a depth of 3 mm to provide undercuts for the mortar. The coupling device sleeve has a filling opening in the middle of the coupling device sleeve with respect to the height of the cylindrical shape of the coupling device sleeve. Four fixing holes with threads each applied with a M14 screw are together with the filling opening evenly distributed along a line parallel to the axis of the cylindrical shape of the coupling device sleeve. Hence, on each half of the line two fixing holes with threads are positioned and in the middle the filling opening.

For preparation of the rebar coupling device seismic test according to NZS3101 and ISO 15835, two rebars of the BS500 grade having a diameter of 20 mm and a length of 0.5 m were inserted in the opening of each side of the coupling sleeve until they touched each other in the middle. Then each rebar was fixed with the M14 screws through the fixing holes with threads applying a torque force of 150 Nm with a calibrated torque wrench. Subsequently, a two-component mortar was injected into the opening in the middle of the sleeve until the mortar reached the openings on the side, where the rebars are inserted. The system was cured for seven days at ambient temperature. After the curing time, the coupled rebar system was placed into a test rig and was tested according to ISO 15835-1 and ISO 15835-2. The results were evaluated according to ISO 15835:2009 with respect to force and slip. To pass the seismic test, following criteria must be met:

u4 ≤ 0.3 mm

u8 ≤ 0.6 mm

*Examples*

*a) Preparation of Mortars*

For comparison, the commercially available products RE500 V4 (IE1) and FP700 R (CE1) from Hilti Deutschland AG were used.

*b) Results*

To characterize the performance of the used two-component mortar systems, the shrinkage, the inner strength, and the mechanical performance in a coupling device sleeve have been determined, as outlined in Table 1.

*Table 1: Results of the examples*

| | | IE1 | CE1 |
|---|---|---|---|
| Shrinkage | [%] | 3.0 | 5.5 |
| Inner strength | [MPa] | 39.7 | 20 |
| u4 | [mm] | -0.18 | 0.30 |
| u8 | [mm] | -0.1 | 0.41 |

The results show that all mortars fulfill the criteria according to ISO 15835-1 and ISO 15835-2. Mortars possessing an inner strength of more than 25 MPa and a shrinkage of less than 4% show significantly lower slip (u4 and u8) compared to the FP700 R mortar (CE1), which just passes the test and thus exhibits the risk of not being compatible with different rebar geometries.

The results further show that using a resin-based mortar, especially an epoxy-amine mortar with a hybrid hardener (IE1) exhibiting additional adhesion to steel, gives exceptionally low slip and thus a high seismic performance. Additionally, the faster reaction of the polymerization reaction compared to the cement reaction of the other mortar, allows earlier loading of the coupler/rebars and thus ensures a smoother workflow on the jobsite, saving labor costs (less use of formwork, scaffolds etc. during the curing time).

## Claims

**1.** Kit of parts for coupling at least two elongated elements comprising two ends with a coupling device, the kit of parts comprising:

a coupling device, and
a multi-component resin mortar system,
wherein the coupling device comprises a coupling device body,
wherein the coupling device body has an axis, a wall, a hollow body portion having an inner surface, and at least two receiving openings for receiving the at least two elongated elements, and
wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin.

**2.** The kit of parts according to claim 1, wherein the kit of parts further comprises a filling means for the multi-component resin mortar system, wherein the filling means preferably is a multi-chamber dispenser.

**3.** Coupling device for coupling at least two elongated elements comprising two ends, wherein the coupling device comprises a coupling device body,

wherein the coupling device body has an axis, a wall, a hollow body portion having an inner surface, and at least two receiving openings for receiving the at least two elongated elements, and
wherein the coupling device body comprises at least one support element on the inner surface of the hollow body portion.

**4.** The kits of parts according to any of the preceding claims 1 or 2 or the coupling device according to claim 3, wherein the wall further comprises at least two load-transition openings,

wherein each load-transition opening comprises one load-transition element,
wherein the at least one support element on the inner surface of the hollow body portion is positioned opposite to at least one of the at least two load-transition openings,
wherein the wall further comprises a filling opening for filling the coupling device body, and
wherein the coupling device body comprises at least one support element on the inner surface of the hollow body portion.

**5.** The kit of parts according to claim 4, wherein the kit of parts further comprises a means for putting load on the load-transition elements of the coupling device, wherein the means for putting load on the load-transition elements preferably is an impact wrench.

**6.** The kits of parts according to any of the preceding claims 1, 2, 4, or 5 or the coupling device according to any of the preceding claims 3 or 4, wherein the inner surface of the hollow body portion comprises undercuts extending perpendicularly to the axis of the coupling device body.

**7.** Method for coupling at least two elongated elements comprising two ends with a coupling device according to any of the preceding claims 3, 4, or 6, wherein the method comprises the steps of:

a) Inserting one end of each elongated element into one respective receiving opening of the at least two receiving openings of the coupling device,
b) Putting load on the load-transition elements of the coupling device, thereby putting load on each end of the at least two elongated elements,
c) Filling the hollow body portion of the coupling device with a multi-component resin mortar system, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin,
d) Letting the multi-component resin mortar system cure.

**8.** Use of a multi-component resin mortar system for fastening at least two elongated elements comprising two ends in a coupling device according to any of the preceding claims 3, 4, or 6, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin.

**9.** Use of a coupling device according to any of the preceding claims 3, 4, or 6 for fastening at least two elongated elements comprising two ends with a multi-component resin mortar system, wherein the multi-component resin mortar system comprises a resin component (A) comprising at least one reactive resin, and a hardener component (B) comprising at least one hardener for the at least one reactive resin comprised in the resin component (A), wherein the at least one reactive resin in resin component (A) is a curable epoxy resin having an average epoxy functionality of 2 or greater, and the at least one curing agent in hardener component (B) is a curing agent for the curable epoxy resin.

**10.** Use of a kits of parts according to any of the preceding claims 1, 2, or 4 to 6 for fastening at least two elongated elements comprising two ends.

**11.** The kit of parts according to any of the preceding claims 1,2, or 4 to 6, the method according to claim 7, or the use according to any of the preceding claims 8 to 10, wherein the hardener component (B) of the multi-component resin mortar system is a hybrid hardener component (B'), wherein the hybrid hardener component (B') comprises a mixture

of

(iv) at least one amine, selected from among aliphatic, alicyclic and aromatic amines, wherein the amine on average has at least two reactive hydrogen atoms, bonded to a nitrogen atom, per molecule;

(v) a novolac resin of formula (I):

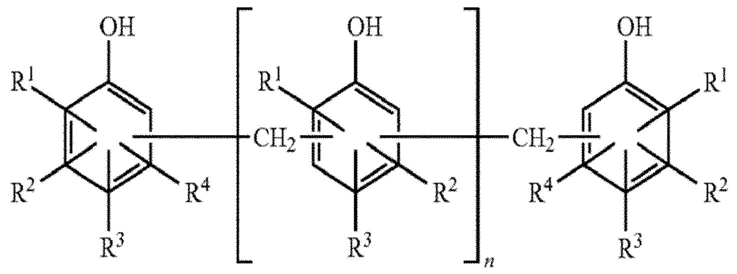

(I)

in which $R^1$, $R^2$, $R^3$ and $R^4$, each independent of each other, are hydrogen or an unbranched or branched $C_1$-$C_{15}$ alkyl radical and n is 1 to 12, wherein the novolac resin is comprised in an amount in the range of from 30 to 45 wt.-% with respect to the total weight of the hybrid hardener component (B'), and

(vi) a compound of formula (II):

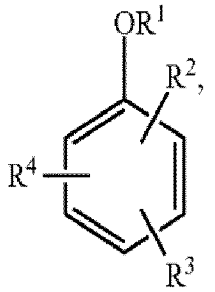

(II)

in which $R^1$ is hydrogen or an unbranched or branched $C_1$-$C_{15}$ alkyl radical, $R^2$ is a $(CH_2)nNR^5R^6$ radical or a $NH(CH_2)nNR^5R^6$ radical, in which $R^5$ and $R^6$ independently of each other are an unbranched or branched $C_1$-$C_{15}$ alkyl radical and n is 0 or 1, $R^3$ and $R^4$ independently of each other are hydrogen or a $(CH_2)nNR^7R^8$ radical or a $NH(CH_2)nNR^7R^8$ radical, and $R^7$ and $R^8$ independently of each other are an unbranched or branched $C_1$-$C_{15}$ alkyl radical and n is 0 or 1.

**12.** The kit of parts according to claim 11, the method according to claim 11, or the use according to claim 11, wherein in the hybrid hardener component (B') in formula (I), $R^1$ to $R^4$ are hydrogen, or one or two of the radicals $R^1$ to $R^4$ are $CH_3$ radicals, or one of the radicals $R^1$ to $R^4$ is a tert-butyl radical or an unbranched or branched $C_8$-$C_{15}$ alkyl radical.

**13.** The kit of parts according to claims 11 or 12, the method according to claims 11 or 12, or the use according to claims 11 or 12, wherein in the hybrid hardener component (B') in formula (II), $R^1$ is hydrogen, $R^2$, $R^3$ and $R^4$ are each a $(CH_2)nNR^7R^8$ radical with n=0 or 1, and $R^7$ and $R^8$ are methyl or ethyl, preferably the compound of the formula (II) is tris-2,4,6-(dimethylaminomethyl)phenol.

**14.** The kit of parts according to any of the preceding claims 11 to 13, the method according to any of the preceding claims 11 to 13, or the use according to any of the preceding claims 11 to 13, wherein the hybrid hardener component (B') comprises a mixture of at least two amines, selected from among aliphatic, alicyclic and aromatic amines.

**15.** The kit of parts, the method, or the use according to claim 14, wherein the mixture comprises (i) alkyl diamine and aromatic amines or (ii) alkyl diamines, polyalkylene-polyamine and aromatic amines.

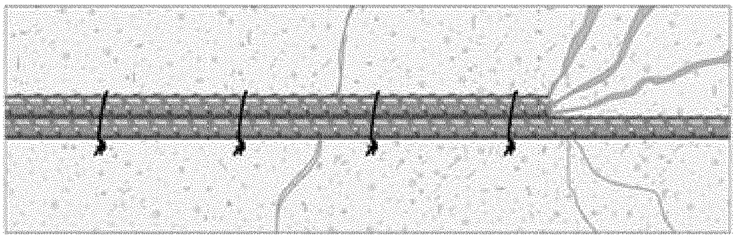

Figure 1

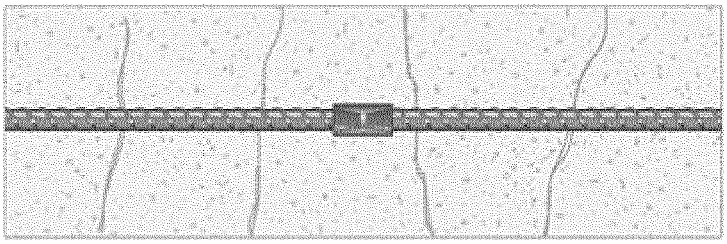

Figure 2

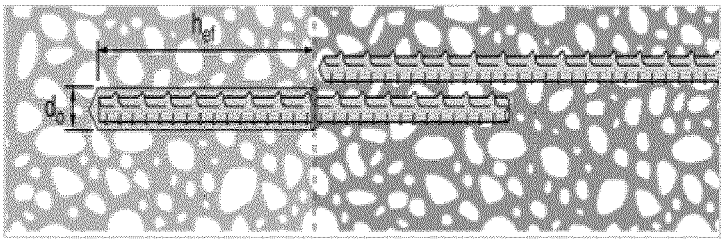


Figure 3

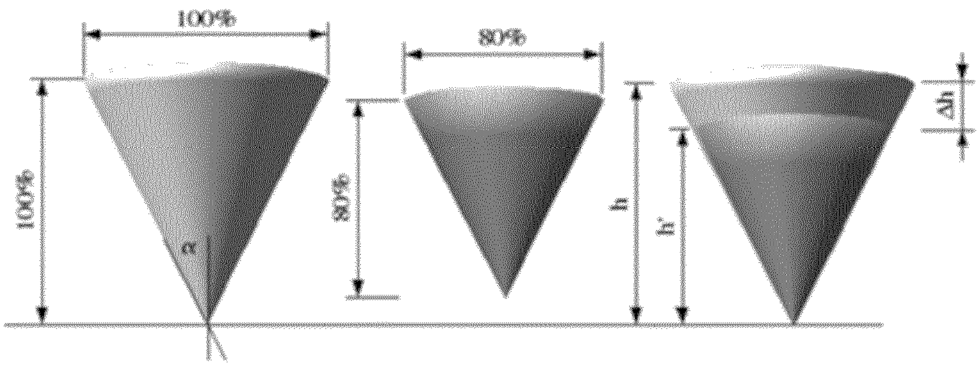


Figure 4

Europäisches Patentamt
European Patent Office
Office européen des brevets

# EUROPEAN SEARCH REPORT

Application Number
EP 24 17 0701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 074 671 A1 (HILTI AG [LI]) 19 October 2022 (2022-10-19) * the whole document * ----- | 1-15 | INV. E04C5/16 C04B26/14 C08L63/00 C08L63/04 |
| X | EP 4 124 629 A1 (HILTI AG [LI]) 1 February 2023 (2023-02-01) * the whole document * ----- | 1-15 | |
| X | GB 2 127 512 A (HOPE PAUL FRANCIS) 11 April 1984 (1984-04-11) * figures 1-4 * ----- | 3-6 | |

TECHNICAL FIELDS SEARCHED (IPC)

E04C
C09J
C04B
C08L

The present search report has been drawn up for all claims

| Place of search | Date of completion of the search | Examiner |
|---|---|---|
| The Hague | 12 September 2024 | Petrinja, Etiel |

1

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

# ANNEX TO THE EUROPEAN SEARCH REPORT ON EUROPEAN PATENT APPLICATION NO.

EP 24 17 0701

This annex lists the patent family members relating to the patent documents cited in the above-mentioned European search report. The members are as contained in the European Patent Office EDP file on
The European Patent Office is in no way liable for these particulars which are merely given for the purpose of information.

12-09-2024

| Patent document cited in search report | Publication date | Patent family member(s) | Publication date |
|---|---|---|---|
| EP 4074671 A1 | 19-10-2022 | EP 4074671 A1 | 19-10-2022 |
| | | EP 4323324 A1 | 21-02-2024 |
| | | WO 2022218726 A1 | 20-10-2022 |
| EP 4124629 A1 | 01-02-2023 | NONE | |
| GB 2127512 A | 11-04-1984 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5046878 A
- US 5664902 A
- US 5909980 A


### Non-patent literature cited in the description


- **A. D. MCNAUGHT** ; **A. WILKINSON**. IUPAC. Compendium of Chemical Terminology. Blackwell Scientific Publications, 1997
- *CHEMICAL ABSTRACTS*, 61788-44-1
- **LEE H** ; **NEVILLE K**. Handbook of Epoxy Resins. McGraw-Hill, 1982